# EUROPEAN PATENT SPECIFICATION

(11) **EP 0 530 043 B1**
(45) Date of publication and mention of the grant of the patent: **17.12.1997**
(21) Application number: 92307868.7
(22) Date of filing: 28.08.1992
(51) Int. Cl.: B65D 81/34, A21B 3/13

(54) **Thermally processed cup cake and a method of making same**
Wärmebehandelter Kuchen und Verfahren zu seiner Herstellung
Petit gâteau traité thermiquement et sa méthode de fabrication

(30) Priority: 30.08.1991 JP 244055/91; 18.08.1992 JP 240115/92
(43) Date of publication of application: 03.03.1993
(73) Proprietor: Ito, Sadaharu, Tokyo (JP)
(72) Inventor: Ito, Sadaharu, Tokyo (JP)
(74) Representative: Harrison, David Christopher

(56) References cited:
- DE-A- 2 948 231
- DE-U- 8 318 674
- DE-U- 8 401 913
- PATENT ABSTRACTS OF JAPAN vol. 16, no. 238 (C-946)2 June 1992 & JP-A-4 051 841 ( SADAMI ITO ) 20 February 1992

## Description

The present invention relates to an improvement in thermally processed cup cakes and the method of making such cup cakes.

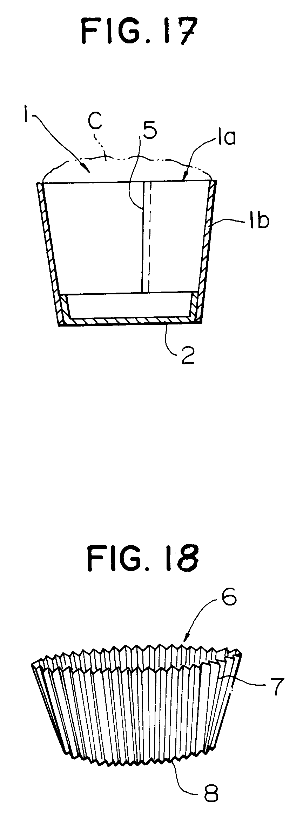

There are conventional cup cakes shown in the following drawings:
a) As shown in Fig. 17, in making each cup 1, side wall 1b of a cup 1 is firstly bonded at lap portions 5 so as to be formed as a hollow truncated conical tube, then a base plate 2 is inserted into the interior of the cup 1 at the bottom thereof to make a completed cup 1 having a bottom. Thereafter a number of these completed cups are stacked one upon another to form a pile of stacked cups, then a number of piles of thus stacked cups are lined up and packed in carton boxes or the like in a state having large amount of dead space not only within each stacked pile but also between neighbouring piles. Then, the stacked cups are transported to a bakery or bakeries, where they are taken out and are arrayed so that kneaded pasty dough can be poured and filled into each cup 1 through the top opening 1a.
b) As shown in Fig. 18, a cup 6 having a number of pleats in its side wall 7 is formed in such a manner that a number of stacked punched out circular paper sheets are pressed by a pair of heated pleating tools. This cup 6 of b) type can be said to be an economical one, because each cup 6 having both a side wall 7 and a contiguously formed bottom wall 8 can be punched out from a paper blank by one action and the way of forming can also be readily performed, since 30 to 50 pieces of cup blanks can be formed while they are being stacked together, by using a pair of metal pleating tools (not shown) consisting of a male tool and a female tool. Therefore, the cup 6 of this type is most economical with respect to both the yield ratio of cup from a paper stock and the forming cost as compared with other conventional type cake cups.

The cake cup referred to in the above item a) still necessitates a hollow holding jig made of metal or plastics when it is used to receive pasty dough at the bakery.

At least one such holding jig is required per each type of cup or per each lot of the same type, thus such holding jigs of different size are required per each type and size of cups. Such being the case, it is inevitable for most bakeries to prepare a large number of holding jigs for various types and sizes of cup cake. In addition, it is also required to keep these jigs always clean by washing and removing away any bit of dregs of baked cake, and this work of preserving and maintaining jigs is imposed on bakery sites.

In addition, bakeries are often required to supply cake or cakes of novel configuration and taste to suit the consumer's demand and it means short life time of such novel products, and therefore, it becomes necessary for most bakeries to prepare and maintain a large number of hollow metal or plastic jigs of various kind and size. Moreover, maintenance and management costs for the above-mentioned holding jigs including personnel expenditure necessary for such work impose further expense on bakeries.

When cups of one type are fabricated as upright hollow cylindrical shapes of the same size, it is impossible to telescopically stack them together to reduce their total volume so as to reduce the transportation cost as much as possible. Consequently, each of them is obliged to be formed to take a truncated conical cylinder having a draft angle of about 6° so that they can be stacked together. Usually 100 cups are stacked as a pile and a large number of such piles of cups are arrayed in a box and a number of such boxes are packed for transportation to user's site, so that they can be pulled out one after another after they have been delivered to a bakery or the like.

However, such conventional mode of transportation is still uneconomical, because the dead spaces unoccupied in each pile of stacked cups and those between neighbouring piles of stacked cups are considerably large in volume, although their total weight may be very low. Accordingly, total weight of the cups in a track at limit volume is still very low due to the reasons mentioned above, and this uneconomical situation has long remained unsettled.

In addition, due to the fact that the cup of a) type is required to take a truncated hollow conical cylinder so as to have a draft of required angle. This has brought about an uneconomical yield of punching out blanks of side walls from a paper sheet or rolled paper stock, since each of such blanks has to take a shape defined by developing the upright cylindrical side wall. As to the cup of item b), it is apt to be deformed due to the fact that pleats in its side wall can be extended and deformed by the weight of the dough filled into the cup, and thus the filled dough is liable to flow out, thereby it is needed to adapt the cup in a hollow tubular jig made of metal or plastics so as to prevent the filled dough from flowing out.

In making cups for cup cakes, each cup is required to withstand the weight of the filled dough until the time when heating of the dough filled cup takes place.

Generally, specific gravity (apparent specific gravity) of cake dough is about 0.94, so it is required for both the side wall of the hollow tube and the base plate being engaged with the lower part of the side wall of each cup to withstand the depressive force applied by the weight of the filled dough itself.

When heating step proceeds on, by means of baking or steaming the filled dough, the filled dough expands and its specific gravity decreases to 0.4 to 0.5, so the cup is also required to withstand the depressive force attributable to the expansion of the dough growing into a cake.

On the other aspect, when the filled dough has gone through heating, starch as a main ingredient of the dough of such cup cake becomes pasty alpha starch during the process of gelatinization due to a hydrothermal reaction effected by water added during the kneading for making the dough and the heat of the subsequent heating process.

The pasty alpha (α) starch, on the other hand, acts as a kind of adhesive or bonding agent for bonding the cup holding the filled dough, so it is necessary to adjust two actions of the filled dough, one acts to increase depressive force due to its expansion, and the other acting as a bonding agent for bonding the cup components due to its gelatinized alpha state starch, in an effective manner.

In other words, cups for making baked or steamed cup cakes are required to have a strength which can withstand both forces, one imposed by the weight of the dough itself during the filling of dough into each cup, and the other imparted by the expansion of the dough during heating.

DE-A-2948231 discloses a cake mould for ready-to-bake cakes which comprises two sections, one a flat base plate and the other a side piece in the form of a continuous band with flaps folded at right angles thereto; the band can be opened out to a cylinder into which the base plate is insertable so as to rest on the flaps and thus form the mould. DE-U-8401913 discloses a cake mould which comprises two sections, one a flat base plate and the other a strip with foldable flaps, the ends of which strip can be overlapped so as to form a band; the band can be opened out to a cylinder into which the base plate is insertable so as to rest on the folded flaps, and thus form the mould.

Neither document mentions cup-cakes and in each case the side walls are secured along the full depth of the mould. The moulds are held together by the resilience of the side walls, and are preferably coated with grease-repellent silicone plastics to minimise any sticking of the cake to the mould.

In view of the above-mentioned problems and some other conditions necessary for solving the problems, the present invention aims to provide a cup cake with improved cups of various shapes and a method for making such cups.

The present invention provides a cup cake, formed in a mould of which the base has an upstanding peripheral wall and in which the mould is bonded together by gelatinisation of α-starch in the cake dough, as set out in claim 1. The invention also provides a method of making such a cup cake, as set out in claim 8.

In order to provide the cups of improved shape and the method of making such cups as aimed, the portion of the side wall of the cup is formed as a straight hollow cylinder mainly fabricated from a lengthy cut paper sheet or rolled paper stock which has already been sealed at its both transverse ends to constitute a preformed work somewhat like a lengthy envelope having a front side and a reverse side of specified width, and the paper for making this preformed work is selected as to have flexibility enough to take any desired cross-sectional configuration.

The thus formed envelope-like preformed paper sheet or rolled paper stock is cut out by shearing or other means, into a lot of blanks each formed as a flat single piece of a side wall or as a twin like blank each carrying two to four pieces of contiguously formed side walls and are dividable into each blank of cup by a cut line. Base plates for several different shaped cups are prepared separately as having both a bottom plate of various shape, such as circular, square, rectangular, polygonal or even as elliptical, and a peripheral wall standing upright from the periphery of the bottom plate and formed to have an outside diameter almost the same as that of the inside diameter of the side wall of the cup so that the peripheral wall of the base plate can be inserted in and fitted on the inner face of the side wall when it has been expanded to constitute a hollow upright cylinder.

The flat cut blanks for forming the side wall of the specified cups and base plates for such cups are separately prepared either in the same cup making shop or in another shop and are delivered to any bakery site, where the flat cut blanks for forming cup side walls of a group of cups are expanded to form side walls, and the inner face at the lower end of each thus formed side wall is fitted with a base plate formed as circular, square, rectangular or other shape as mentioned above. Then the flexible side wall, laid as an upright cylinder, will adopt a configuration the same as that of the base plate by following the respective shape of the base plate placed for setting a cake cup.

Flat-band blanks cut from lengthy preformed paper stock are packed layer by layer and a large number of thus packed cut blanks are transported to a bakery site, while the base plates are stacked and sent to said bakery site in a conventional manner. Since the base plates are low in height and far less bulky as compared with most side walls of many types of cake cups and the transportation cost for such base plates is comparatively low.

The thus packed and transported flat blanks of side walls are expanded at the bakery site to form side walls of upright cylindrical tubes. Then each base plate is inserted in and fitted on each inner face of each side wall to constitute a self-supporting hollow cup without applying any adhesives for fixing each base plate to each side wall. Thereafter dough is poured into each cup to fill the interior of each cup and it serves as a pasty material for holding the cup temporarily in assembled state until the next step of heating takes place. Then both the cup and the dough filled therein are placed in a suitable oven and are heated therein to effect not only baking but also bonding of the base plate to the lower part of the side wall by utilizing gelatinization of the starch in the dough into alpha starch caused by hydrothermal processing of the dough.

By virtue of the above-mentioned side walls of the cylindrical shape and by using the dough as a binding agent problems relating to transportation of bulky cups and poor yield in cutting out side wall of hollow conical cake cup can be alleviated.

However, there still remained one more problem to be solved which in itself is not indispensable but is desirable for working the present invention.

That is, as already explained, the envelope-like preformed paper sheets, say 100 sheets, are stacked and cut out in a successive manner to form a blank of 100 pieces of side wall blanks in flattened state by shearing or the like, as a lot of blanks each formed as a flat single piece of a side wall.

The conventional cutting or shearing operation of the above-mentioned manner still suffers from the following problem.

Namely, when a number of preformed paper stocks is stacked layer by layer, and the same number of blanks of cup walls is cut out or sheared in one cutting motion to form a number of blanks, each forming a single cup wall, if the length of the feed of the paper, namely the height of the wall of the cup is 50mm or less, cut works will collapse and are randomly scattered in front of and adjacent to the cutting zone. If such collapsing takes place, scattered blanks of side wall must be collected and neatly stacked again by the hands of workers to band them for packing, this is also a secondary problem to be solved preferably together with the main first aspect of the upright cylinder type side wall of the present invention.

According to the present invention, the secondary problem as explained above has been solved by making cutting stroke of the wall blank to the length twice to four times of the height of one cup wall. That is, a blank to be cut in one cutting motion has been set as a twin-type one each carrying two to four pieces of contiguously formed side walls having being divided by one or more cut perforation lines which consist of several slits of about 20mm length interposed by a plurality of retaining points of 1 to 2mm length.

The twin-type blank as mentioned above can settle the collapse of cut blanks, and since the thus-cut twin-type blanks still maintain their cut shape by the intermittently formed retaining points, a number of such cut blanks, say 100 blanks can be stacked and banded by a banding strip for transportation to a bakery or the like, where each of the thus banded twin-type blanks is separated into each blank for a single cup wall by readily tearing off their retaining points by hand.

Speaking of the cup as a container for receiving the dough, it is usually required to have a strength enough to withstand the compressive force when the filled dough expands during the heating step. However, cake cup of the present invention, by virtue of adopting various side walls have upright hollow cylindrical shape, compressive force generated by the expansion of filled dough during the heating step is mainly directed upward to the upper opening of the cup and escapes outward. Moreover, almost concurrent with this expansion the dough also begins to be gelatinized into alpha starch and acts as a kind of bonding agent to bond the hollow cylindrical side wall portion and the base plate together. And therefore, the strength of such cup as a container has only to withstand the depressive force applied by the weight of the dough itself when it is filled. Thus the size of the cup and the quality of the paper are selected so as to be enough to withstand the weight of the dough filled into the cup and to be made self-supporting without requiring application of any particular bonding agent.

Due to the fact that the side wall of any cup to be used is made as an upright cylindrical shape, the upper end of one cup wall and the lower end of succeeding next cup wall can be cut by a single cutting operation, regardless of whether the lower end and the upper ends are cut straight to cut to have wave-like or petal-like protrusions.

Now, the operation of making cup cake according to the first embodiment of the present invention will be explained. Firstly a base plate having almost the same outside length or diameter as that of the inner size of a side wall is inserted, by passing through either the lower opening or the upper opening of the side wall so as to be positioned at the lower part of the side wall, so that the upright peripheral wall of the base plate snugly fits on the inner face of the cylindrical side wall.

Since the size of the base plate and the quality of the paper sheet to be used are selected to obtain a strength sufficient enough to withstand the depressive force imparted by the weight of the dough to be filled, there takes place no appreciable deformation nor any damage to the cup.

Upon starting of thermal processing such as baking or steaming, the base plate and the side wall are firmly bonded together by means of gelatinization of the starch in the dough and constitutes a cup, moreover the depressive force imparted by the expansion of the dough into a cake is mainly directed to the upper opening of the cup, consequently the base plate can fully withstand against any partial swelling or weight of the raw dough.

Furthermore, since the cutting width, namely the cut stroke for wall blank can be set to have twice to four times so that each cutting can form twin-type blanks each having two to four single wall blanks, for instance, if the height of the side wall of a cup is 50mm, the height (cut stroke) of one twin-type blank is set to 100mm, similarly, it is set to 140mm, when the height of the side wall of a cup is 70mm.

By virtue of such way of performing twin-type blank forming, problem of collapsing can be obviated and cutting work also can be done in an efficient manner.

The above and other objects, features and advantages of the present invention will become more apparent from the following description when taken in conjunction with the accompanying drawings in which preferred embodiments of the present invention are shown by way of illustrative examples.

Fig. 1 is a cross sectional side view showing a flat bottom type cup for a thermally processed cup cake according to the present invention.

Fig. 2 is a cross sectional side view showing a raised bottom type cup for a thermally processed cup cake according to the present invention.

Fig. 3 is a plan view showing a blank cut as a developed shape of a side wall for a thermally processed cup cake according to the present invention.

Fig. 4 is a view showing a blank for a side wall being in folded state and a base plate placed in two different positions so as to be inserted to the side wall.

Fig. 5 is a perspective view showing a side wall in an expanded state and a base plate to be inserted according to the present invention.

Fig. 6 is a plan view showing a blank of a base plate having a peripheral wall formed as petal-like protrusions.

Fig. 7 is a perspective view showing the base plate shown in Fig. 6 with its peripheral wall composed of petal-like protrusions bent upward.

Fig. 8 is a perspective view showing the base plate shown in Fig. 7 inserted in the lower part of the side wall.

Fig. 9 shows the shape of a blank for forming a square side wall and the sequence of operation for forming a square cup, wherein (A) is a plan view of a blank of a base plate for forming a square cup, and (B) is a perspective view showing both the base plate shown in above (A) with its four peripheral pieces having been raised upward and a cylindrical side wall into which the base plate shown above is inserted, and (C) is a perspective view of an assembled square cup.

Fig. 10 is a perspective view of a base plate.

Fig. 11 is a plan view of a blank of a side wall cut as a flat strip.

Fig. 12 is a perspective view of a cup formed by way of winding the flat strip around the outer periphery of the base plate.

Fig. 13 is a plan view of a blank of a side wall cut as a twin-type one having wave-like protrusions on both the upper and lower ends and formed with a straight transverse cut line formed on the middle part of the blank.

Fig. 14 is a plan view of a blank of a side wall cut as another twin-type one having straight upper and lower ends and wave-like cut line formed on the middle part of the blank.

Fig. 15 is a perspective view showing a bundle of a plurality of twin-type blanks banded by a banding strip.

Fig. 16 is a perspective view showing rotary die cut system in operation, wherein a twin-type blank shown in the above Fig. 13 has just been cut out between a pair of cutting rolls.

Fig. 17 is a perspective view showing a conventional cup for making a cup cake. Fig. 18 is a perspective view showing another type conventional cup for making a cup cake.

### DESCRIPTION OF THE PREFERRED EMBODIMENTS

Preferred embodiments of the present invention will now be explained by referring to the accompanying drawings.

### Embodiment 1

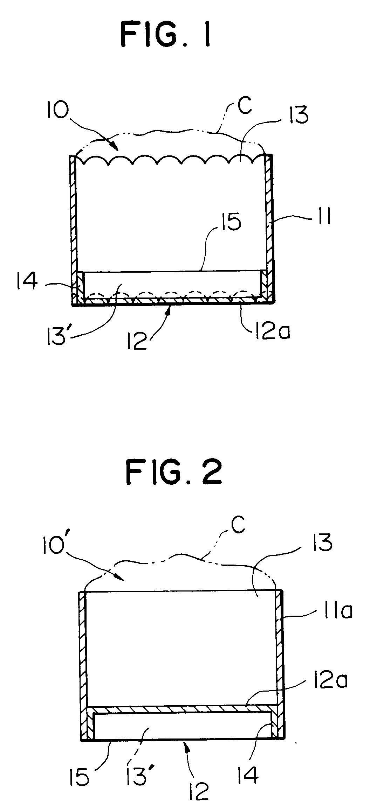

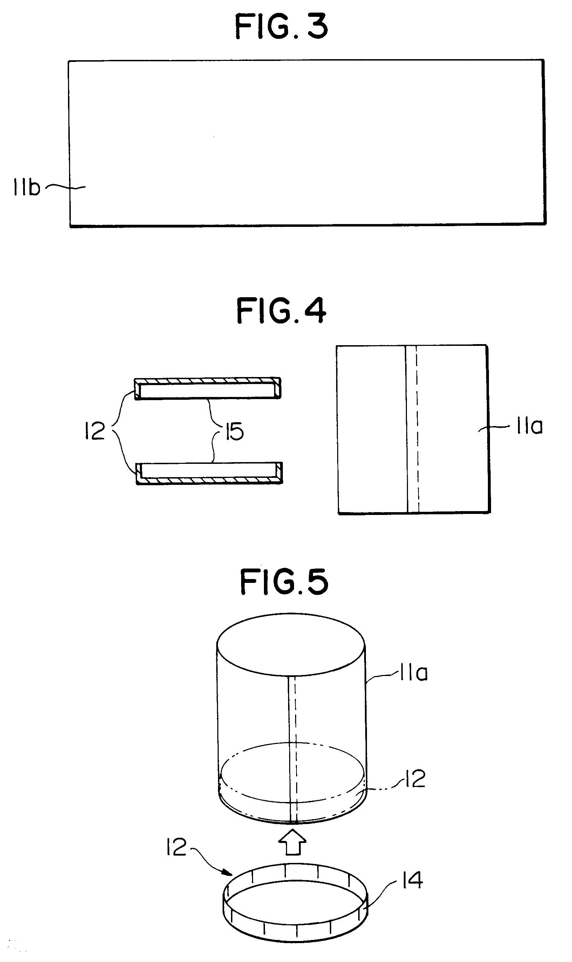

Fig. 3 is a plan view of a single blank 11b of a side wall 11 of a cup 10 fabricated of unbleached kraft paper of 80g/m², and the blank 11b is formed from a lengthy blank (not shown) sealed and folded in a continuous manner as an envelope-like one having a transverse width of 100mm and a length of 50m. In cutting the length blank for side wall to form a blank of single side wall 11 having a height of 45mm, if both the upper opening 13 and the lower opening 13' are cut to have wave-like protrusions as shown in Fig. 1 and the thus cut blank 11 is expanded to form a circular cylinder, then the thus formed cylinder will have a radius of 31.85mm according to the relation, 2π R = 100.

On the other hand, if both the upper opening 13 and the lower opening 13' are cut straight as shown in Fig. 2, an upright hollow cylinder for a side wall 11 is formed.

As to the base plate 12, a circular disc is cut out from a unbleached kraft paper of 80g/m² to have a diameter of 83.7mm and depressed by a circular metal ram having a diameter slightly smaller than the inside diameter of the side wall, the centre of the metal ram positioned to be concentric with the circular disc, then the disc is thus formed as a base plate 12 having an outside diameter of 63.7mm and a peripheral wall 14 having a height of 10mm and a configuration like a circular dish as shown in Figs. 1, 2, 4 and 5.

The base plate 12 is pushed downward so as to be inserted into the side wall 11 by passing its lower closed end through the upper opening 13 of the side wall 11 to constitute a flat bottom cup 10 shown in Fig. 1. Then 70 gram (about 70cc) of raw dough (hereinafter merely referred to as dough), prepared pasty and soft and having an apparent specific gravity of 0.9, was poured to be filled into the cup 10 and then the suitable number of cups filled with dough were placed in an oven heated at a temperature of 180°C and held there for 18 minutes; as a result, cup cake C, grown above the top opening 13 shown by the double dotted line in Fig. 1, was obtained.

When a raised bottom type cup is desired, the base plate 12 is inserted with its opening 15 is directed upward as shown in Fig. 2 and passed through the lower opening 13' of the upright cylindrical base plate 11a, then a cup of 11a of raised bottom is obtained.

The ingredient of the dough used in this embodiment is shown below.

| | |
|---|---|
| flour | 100g (gram) |
| baking powder | 2g |
| sugar | 40g |
| egg | a half egg |
| water | 10g |

### Embodiment 2

A set of upright cylinder type side walls 11 the shape and size of which are the same as that of the above Embodiment 1 were formed from glassine paper of 30.5g/m² were formed, while base plates 12 were formed by using bleached kraft paper of 100g/m² and to have the same bottom plate as that used in Embodiment 1 and the height of peripheral wall 25mm, and the thus formed base plates 12 were inserted into respective side walls 11 by passing through the upper opening 13 to constitute cups 10 which differ only with respect to the height of the peripheral wall 14 of the base plate 12.

65 gram of dough (about 74cc) prepared for steamed cup cake (apparent specific gravity of 0.85) was poured into each cup, and the cups filled with dough were placed in a steaming cage for about 70 minutes; as a result, steamed cakes were obtained which had grown to a height about 5mm above the top of each cup 10.

The ingredients of the dough used in this embodiment are shown below.

| | |
|---|---|
| flour | 100g (gram) |
| baking powder | 4g |
| sugar | 60g |
| water | 80g |

### Embodiment 3

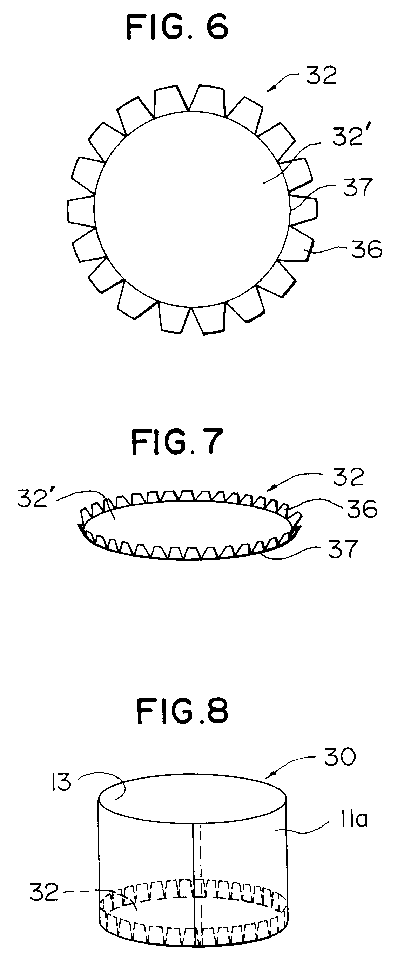

A set of side walls 11a of the upright cylinder type having the same shape and size as the Embodiment 1 were prepared from bleached kraft paper of 80g/m², the same number of circular flat discs 32 as shown in Fig. 6 were formed and these discs were prepared by way of punching out from a bleached kraft paper sheet of 80g/m² to have a diameter of 83.7mm.

The circular disc 32, as shown in Fig. 6, is composed of a circular bottom plate 32' and petal-like protrusions 36 eighteen in number formed around the circle of the bottom plate 32', each of these petal-like protrusions has a base of 10mm length and a height of 10mm, and the bottom plate 32' and the protrusions 36 are bordered by a contiguous bending notch 37 to assist bending the protrusions 36 upright from the bottom plate 32'.

In making a cup 30 shown in Fig. 8, the circular disc 32 provided with a plurality of petal-like protrusions 36 is inserted into the upright cylinder type side wall 11a so that the protrusions 36 can be positioned at the lower end 13' of the side wall 11a. The insertion of the base plate 32 mentioned above is done by bending the protrusions 36 upright along the bending notch 37 as shown in Fig. 7, then the base plate 32 is inserted in the side wall 11a through the upper end opening 13 of the side wall 11a.

70 gram of pasty dough prepared the same as in the Embodiment 1 is filled into the cup 30 then heat processing was effected in a manner similar to that in Embodiment 1 and a similar cake was obtained.

### Embodiment 4

Since most hollow cylinders used as side walls of the present invention are made of paper and have both flexibility and to some extent adaptability, the side wall expanded as a cylinder will take various polygonal shapes similar to the shape of the base plate inserted at the lower end of the cylinder forming the side walls of the cup.

If a circular base plate is used, the side wall will become an upright hollow cylinder as shown in Figs. 1 and 2, if any polygonal base plate such as triangular, tetragonal, hexagonal shape is used, the side wall will follow the shape of the inserted base plate and take a shape of desired polygonal configuration.

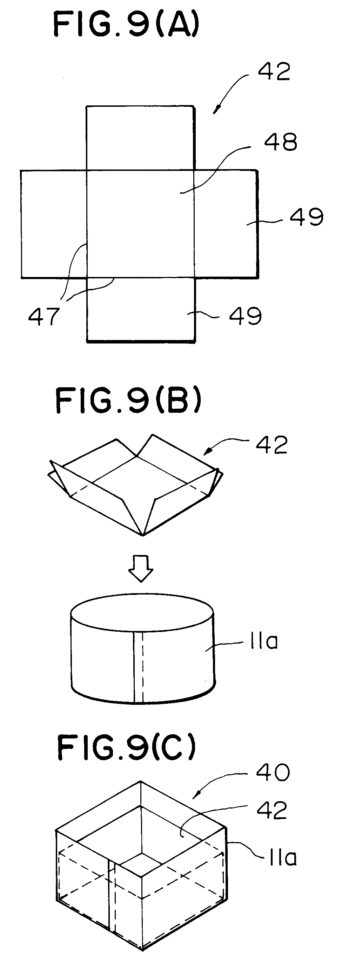

Fig. 9 shows working steps for forming an upright cup 40 as a square cylinder.

A set of blanks for side walls 11a of the upright cylinder type having folded width of 100mm and the length of 50mm (height of the cup) as shown in Fig. 4 were prepared from a bleached kraft paper sheet of 80g/m² unit weight, and the blanks were expanded to form side walls of cups each having the height of 50mm and the diameter of 63.7mm.

A set of blanks for base plates 42 to be inserted into the aforesaid side wall 11a, were prepared using unbleached kraft paper sheet of 80g/m² unit weight and by cutting out the blanks of base plate each having a square base member 48 all four sides 47 of which are 50mm and four rectangular pieces 49 formed contiguously outside the square base member 48 along each of the sides 47 and each rectangular pieces 49 has a width 50mm the same as the side 47 of the base member and height of 45mm and the sides 47 are provided with bending notches.

Insertion of each base plate 42 is performed by, firstly bending the rectangular pieces 49 upward along the sides 47 having bending notches as shown in (B) of Fig. 9, then directing the bent rectangular pieces 49 upward and inserting the base plate 42 into the side walls 11a through the upper opening 13 as shown in (C) of Fig. 9 so that the upright side wall 11a follow the shape of the square base member 48.

Dough of same composition was filled into the thus formed cups 40 and a similar heat processing was conducted, and thereby cup cakes of the same quality were obtained as in Embodiment 1.

In this embodiment, explanation has only been made on a square type base plate, however, other polygonal cup such as triangular, hexagonal or the like can be formed in quite a similar manner, therefore further explanation on making such polygonal shape will not be given.

### Embodiment 5

In the foregoing embodiments 1 through 5, blanks of envelope-like flat shape are supplied sealed at the overlapped portion and still in the folded state when cut as discrete blanks for one side wall of a cup. Each of the blanks is expanded to form an upright hollow cylinder as a wall portion of a cup, into which dough of cake is filled and then thermally processed.

Different from the above embodiments, though the base plate 12 is prepared as an ordinary one having a bottom with peripheral wall 14, the blank for forming side walls is prepared as a lengthy paper sheet having a width equal to the periphery of the side wall 11 or 11a under developed state without having been sealed to form an envelope type blank, and therefore, a mere strip 61a having overlap portions M and N at both transverse ends to be sealed later as shown in Fig. 11, can be successively cut from the lengthy preformed blank as explained above.

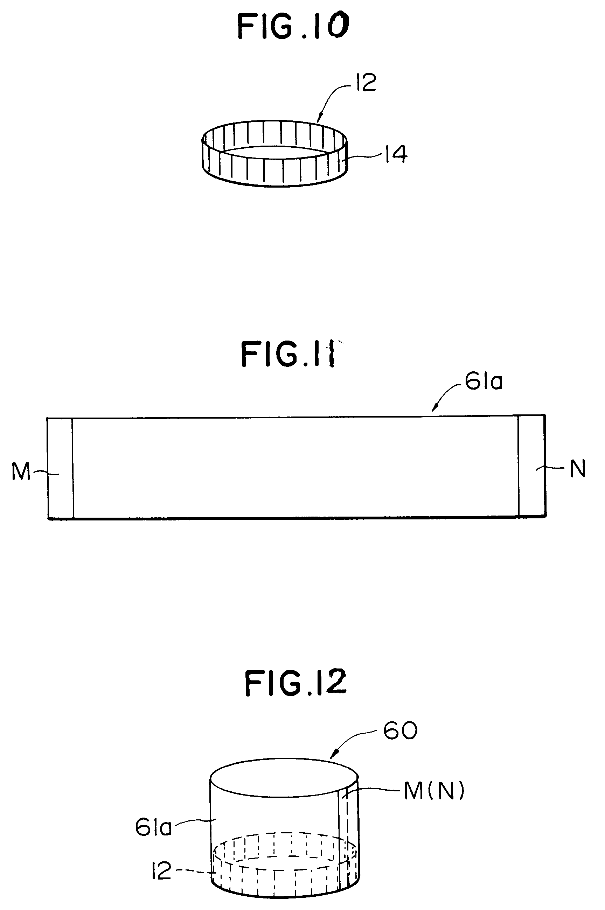

As the next step, the base plate 12 is placed upright as shown in Fig. 12, and the blank 61a as a strip is wound around the peripheral wall 14, then the overlap portions M and N are overlapped and sealed by bonding as shown in Fig. 12, thereby forming a cup 60 ready for making a cup cake. The wound strips 61a may be bonded along their entire height, however they can be spot bonded at their upper and lower parts, or at three parts including the middle point, as a temporary bonding agent, and the bonding along the entire length can be made relying on the gelatinization of the starch in the filled dough as explained in the foregoing embodiment.

### Embodiment 6

This embodiment is practiced to effectively obviate the problem of the collapsing of the discrete cut blanks from lengthy blanks as a preformed material being stacked for cutting a number of discrete blanks, and thereby brings about troublesome work for neatly stacking again for transportation.

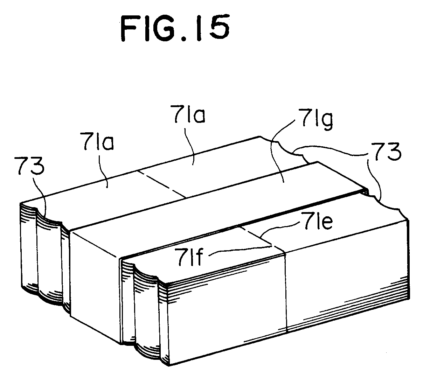

Actually, the cut length of the final blank to be cut per one cutter action from the lengthy envelope-type preformed paper material stock is set to be double length 2h of the height h of cup, like a Siamese twin, and the direction of feeding the work to be cut is set to be the same as the height "h" of the cup to be formed. The cutter used for forming a cut line for separating such twin-type blanks later at bakery site is composed of a plurality of arrayed blades of about 20mm length or more interposed by short non-blade portions of about 1 to 2mm length, so that the two blanks in twin shape are kept retained as one piece, being retained by the short retaining portion formed by the non-blade part of the cutter. Thus twin blanks cut out can be stacked one after another and banded together by a banding strip as shown in Fig. 15, thereafter the twin blanks can be readily separated into two discrete pieces for each side wall by tearing off the short retaining portion by hand at the bakery site.

### Embodiment 7

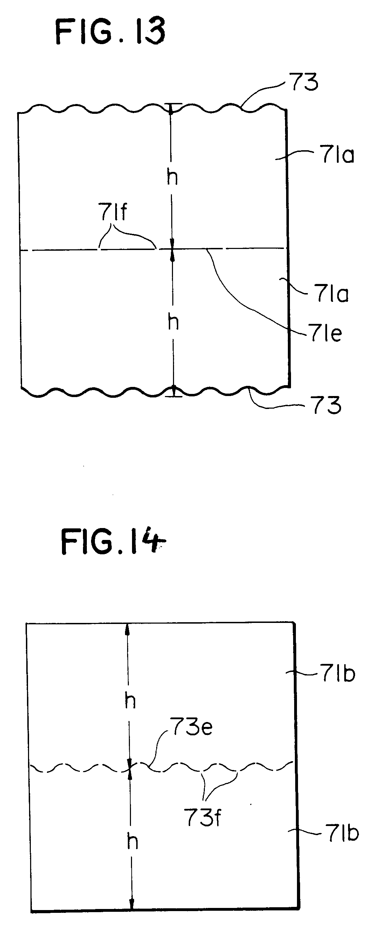

Fig. 13 is a plan view showing two blanks 71a each having a fold length of 95m and a height of 50mm were cut out as a twin blank to have wave-like protrusions 73 on both the front end and rear end (top and bottom ends in Fig. 13) and straight cut slits 71e are formed at the central part as a border of two blanks and interposed by four uncut retaining portions 71f, thereby the twin blank can be separated into two blanks 71a by tearing the retaining portions 71f by hand.

Fig. 14 is a plan view similarly showing two blanks 71b each having a fold length of 95mm and a height of 50mm were cut out as a twin blank to have straight ends on both the front end and rear end (top and bottom ends in Fig. 14) and wave-like protrusions 73e at the central part as a border of two blanks and the protrusions are interposed by four uncut retaining portions 73f, thereby the twin blank can be separated into two blanks 71b by tearing retaining portions 73f by hand in the same manner as explained in the flat twin blank 71a.

Fig. 15 is a perspective view showing 100 pieces of twin blanks 71a which are stacked and the transverse middle part of the thus stacked blanks are banded together by a banding strip 71g.

### Embodiment 8

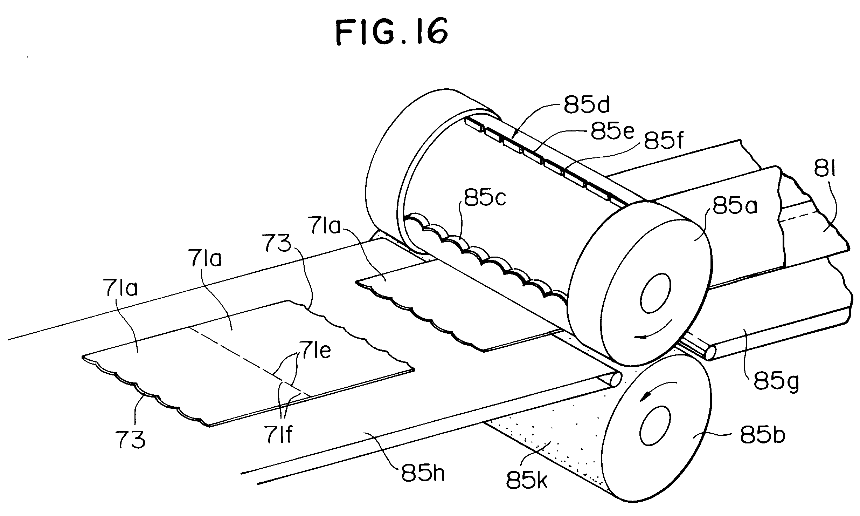

Fig. 16 is a perspective view showing a rotary die-cut system under operation for cutting both the top and rear ends 73 and a wave-like cut line consisting of slits 71e and short retaining portions 71f of two flat blanks 71a as a twin-type blank. Shown are a pair of cutting rollers, consisting of an upper roller 85a and a lower roller 85b.

The upper roller 85a is made of metal and provided with continuously formed male cutters 85c of wave-like shape and linear male cutters 85d composed of blade portions 85e and non-blade short portions 85f of 1mm alternately placed by means of engraving, and these two kinds of male cutters are formed by means of engraving, while the female roller 85b has a surface layer of wound felt paper and a groove or grooves formed by respective male cutters 85c and 85d.

Numerals 85g and 85h show a pair of transfer conveyors for feeding envelope-like preformed blanks and for carrying twin-type cut blanks to a packing station.

A lengthy paper stock prepared as an envelope-like blank 11c is placed on the conveyor 85g and fed between the pair of rollers 85a and 85b being rotated, where the cutting of both ends 73 and the cut line at the middle portion of the twin-type blank are performed by the male cutters 85c and 85d and fed out as a twin-type cut blank carrying the pair of blanks 71a.

The rollers 85a and 85b used in the embodiment have a diameter of 96mm and the peripheral length of about 280mm and roll width of 150mm, and the axes of rotation of these two rollers were set parallel.

An envelope type lengthy blank of 200 metre length was fed between the two rollers for cutting. As a result, four pieces of twin-type blank each carrying two cups 71a having width of 94mm and having wave-like protrusions at both front and rear ends and having a central cut line consisting of 23mm slits separated by retaining portions of 1mm length, were obtained per rotation of the rollers.

### Meritorious Effect of the Invention

Since the side wall of each type of cup cakes according to the present invention is formed as an upright hollow cylinder, it becomes unnecessary to fit a hollow metal cylinder on the outer periphery of each cup so as to reinforce the cup to withstand the weight of the dough being filled as is done with the conventional cake cup.

Up to the present, the shape of the cup has been limited only to hollow conical type; however many other cup shapes of polygonal ones such as triangular, tetragonal, hexagonal type or even a cup of elliptical cylinder type, can be made in accordance with the present invention.

Such cups of various shape can be formed by merely preparing flat band blanks of a predetermined size to be used as side walls, and base plates of predetermined shape such as triangular, tetragonal, hexagonal, or the like to be inserted into said side walls which were prepared as envelope-like blanks.

By virtue of these features, it becomes unnecessary for bakeries to prepare various kinds and numbers of holding jigs made of plastics or metal and to maintain such jigs, thereby personnel expenditure for the aforesaid jobs also can be saved.

Moreover, the pending problem of transporting bulky stacked cups assembled and bonded with base plates, but in a very light weight state encountered in the prior art system, can be entirely obviated.

## Claims

1. A thermally processed cup cake formed by filling a hollow generally cylindrical cup (10) of paper of a pre-determined quality and having a base plate (12) with a pasty dough for the cake and then gelatinizing and solidifying said dough by heating, wherein;
said hollow cylindrical cup comprises:
a side wall portion (11a) formed by a wall blank (11b) fabricated from a pre-formed blank (81), said pre-formed blank being made of a paper of said pre-determined quality and cut out to have a pre-determined width including overlap portions at both transverse ends and arranged substantially as a hollow upright cylinder, the upper and lower ends thereof being substantially the same shape and size;
and a base plate (12) having an outside diameter so as to be insertable into the interior of the hollow cylinder (11a) formed by side wall portion to constitute the base of said cup, wherein.
a portion of said cup cake (C) is formed in the hollow cylindrical cup by gelatinization of said pasty dough by the hydrothermal reaction of the constituent starch of said dough into alpha starch, said pasty dough having been introduced into said side wall portion after insertion of the base plate to form a temporary unbonded assembly, said gelatinization being effected by the water content of said dough and subsequent heating, the surface of said cake contacting the inner face of said cup being formed from the surface of said dough contacting the inner face of said cup and bonding said side wall portion and said base plate, and the body of said cake in said cup being formed from the body of said dough;
said side wall portion of the cup is prepared from a folded flat-band blank (11b) of which the overlapped portions have been prebonded and which has been cut to a pre-determined length sufficient to constitute said side wall portion and expanded to constitute a hollow upright cylinder (11a); and
said base plate (12) is formed as a dish-like shape composed of a bottom plate (12a) and a peripheral wall (14) upstanding from the periphery of said bottom plate and of a size sufficient to be insertable into the inner face of said expanded side wall portion so as to constitute a cup with either a flat (10) or raised (10') base.

2. A thermally processed cup cake as claimed in claim 1 wherein said dish-like base plate is prepared as a circular dish type base plate and said side wall portion takes the form of an upright circular hollow cylinder.

3. A thermally processed cup cake as claimed in claim 1 wherein said dish-like base plate is prepared as a polygonal dish type base plate (42) and said side wall takes a form of upright polygonal hollow cylinder.

4. A thermally processed cup cake as claimed in one of claims 1 to 3, wherein said side wall portion is provided with a plurality of wave-like or petal-like protrusions at least at one of the upper end (53a) or lower end (53b) thereof.

5. A thermally processed cup cake as claimed in claim 1, wherein said side wall portion is provided with a plurality of wave-like or petal-like protrusions at least on the lower end (53b) and the lower end is further provided with a contiguously formed bending notch along a line connecting the bases of aforesaid protrusions (57), so that said protrusions when bent radially inward along said bending notch can form a receiving portion (53c) for holding the base plate (52) when said base plate is inserted to reach said receiving portion (53c).

6. A thermally processed cup cake as claimed in claim 1, wherein said peripheral wall of said base plate (32) is formed from a plurality of wave-like or petal-like protrusions (36) on the periphery of said base plate and a contiguously formed bending notch along a line connecting the bases of aforesaid protrusions (37), so that said protrusions when bent upright along said bending notch from said peripheral wall and can fit the inner face of said side wall portion as a fitting portion for fixing the base plate with said wall portion.

7. A thermally processed cup cake formed by filling a hollow generally cylindrical cup (10) of paper of a pre-determined quality and having a base plate (12) with a pasty dough for the cake and then gelatinizing and solidifying said dough by heating, wherein;
said hollow cylindrical cup comprises:
a side wall portion (11a) formed by a wall blank (11b) fabricated from a pre-formed blank (81), said pre-formed blank being made of a paper of said pre-determined quality and cut out to have a pre-determined width including overlap portions at both transverse ends and arranged substantially as a hollow upright cylinder, the upper and lower ends thereof being substantially the same shape and size;
and a base plate (12) having an outside diameter so as to be insertable into the interior of the hollow cylinder (11a) formed by side wall portion to constitute the base of said cup, wherein:
a portion of said cup cake (C) is formed in the hollow cylindrical cup by gelatinization of said pasty dough by the hydrothermal reaction of the constituent starch of said dough into alpha starch, said pasty dough having been introduced into said side wall portion after insertion of the base plate to form a temporary unbonded assembly, said gelatinization being effected by the water content of said dough and subsequent heating, the surface of said cake contacting the inner face of said cup being formed from the surface of said dough contacting the inner face of said cup and bonding said side wall portion and said base plate, and the body of said cake in said cup being formed from the body of said dough;
said base plate (12) is formed as a dish-like shape composed of a bottom plate (12a) and a peripheral wall (14) upstanding from the periphery of said bottom plate and of a size sufficient to be insertable into the inner face of said expanded side wall portion so as to constitute a cup with either a flat (10) or raised (10') base; and
side wall portion of said cup is prepared as a blank of flat strip (61a) having a shape and size obtained by developing the side wall of desired cup, and said pasty dough is filled when the blank of said flat strip has been wound around the outer face of the peripheral wall of said dish-like base plate and bonded along their entire height or spot bonded at points along the overlapped portions, to constitute a side wall (60).

8. A method of making a thermally processed cup cake comprising the steps of:
providing a long pre-formed envelope-type (81) for a sidewall portion of a cup, said envelope type blank being formed from a paper of a predetermined quality grade and cut to a predetermined size including overlap portions at both the transverse ends and bonded and supplied in a flat state; by cutting said envelope-type blank into a predetermined length in a flat folded state to form a flat-band blank sealed at said overlap portions (11b), said flat-band blank being expandable to an upright hollow cylinder having lower and upper ends of substantially the same shape and size (11a);
preparing a base plate (12) to be insertable into the interior of a hollow cylinder formed by expanding said envelope-type blank (81) into said side wall portion, said base plate having a diameter slightly smaller than the inner diameter of said wall;
expanding said flat-band blank (11b) into an upright hollow cylinder (11a) to form said side wall portion and inserting said base plate into the lower part of said side wall portion to make a hollow upright substantially cylindrical cup (10) as a temporary assembly;
introducing a pasty dough into the interior of said hollow upright cylindrical cup,
maintaining the form of said temporary assembly by utilising the pasty nature of said dough until subsequent thermal processing such as baking or steaming is effected,
gelatinizing constitutent starch of said dough into alpha starch by hydrothermal processing by the heat of said thermal processing and the water content of said dough,
thereby forming the body of the cake in said cup from the body of said dough; the surface of said cake contacting the inner face of the said cup being formed from the surface of said dough contacting the inner face of the cup and bonding said side wall portion and said base plate together, such that said cup cake is integrally formed with said cup; wherein
said base plate is prepared as a dish-type base plate (12) having a bottom plate (12a) of a diameter slightly less than the inner diameter of said side wall and a peripheral wall (14) standing up from the periphery of said bottom plate and having a diameter and height to fit the interior of said side wall.

9. A method of making a thermally processed cup cake as claimed in claim 8, wherein;
the work for forming said side wall portions and said base plate is conducted at a cup making works;
while the work for expanding the folded side wall portion (11b) into an upright hollow cylinder (11a), inserting said base plate (12) into the inner part of the bottom part of the cylinder as a temporary assembly (10), filling the pasty dough into the hollow cylinder and conducting thermal processing such as baking or steaming are separately conducted at bakery sites.

10. A method of making a thermally processed cup cake as claimed in either one of claims 8 or 9, wherein;
said cutting work for making the side wall is conducted in such a manner as to form the lower end of one side wall portion (73) and the upper end of the other side portion (73) concurrently by using a straight cutter or cutters having wave-like or petal-like protrusions (85c) while said paper work stock (81) is being fed in the direction of the axial centre line of said hollow cylinder.

11. A method of making a thermally processed cup cake as claimed in any one of claims 8 to 10 wherein;
said cutting work for making the side wall portion is conducted in such a manner as to constitute a twin-type blank (71a) carrying a plurality of blanks for each side wall which can be separated into said each side wall by separating them along a cut line (71e) previously formed at the time of cutting,
and said cutting is done by a rotary die cutter system equipped with;
an upper roller (85a) provided with a first male cutter for cutting the upper and lower end of the side wall of said cups, and a second male cutter (85d) for forming a cut line for separating each side wall portion blank from the twin-type blank, and having a plurality of somewhat lengthy blade portions for cutting slits (85c) and a plurality of unbladed parts interposed between two adjacent blade portions (85f) for forming short retaining portions remaining uncut by said blade portions, and
a lower roller (85b) formed with a soft surface layer of felt paper or the like by which grooves corresponding to said first and second male cutter can be formed by said first and second male cutter.

12. A method of making a thermally processed cup cake as claimed in any one of claims 8 through 11, wherein;
said cutting work for making the side wall is conducted in such a manner as to constitute a single type blank for each side wall portion which can be separated from the next one at the top or bottom end of the time or cutting out,
and said cutting is done by a rotary die cutter system equipped with;
an upper roller provided with plural arrays of male cutters for cutting the upper and lower end of the side wall portion, of said cups as straight ends or as wave-like or petal-like protrusions (85a),
and a lower roller (85b) formed with a soft surface layer of felt paper or the like by which grooves corresponding to said male cutters can be formed by said male cutters.

13. A cup for making a cup cake according to any one claims 1 to 7 or for use in performing a method according to any one of claims 8 to 12.

14. A cup according to claim 13 which is made of unbleached kraft paper.

## Patentansprüche

1. Wärmebehandelter Napfkuchen, gebildet durch Befüllen eines hohlen, allgemein zylindrischen Napfes (10) aus Papier mit vorbestimmter Qualität und einer Basisplatte (12) mit pastenartigem Teig für den Kuchen und anschließendes Gelieren und Verfestigen des Teigs durch Erhitzen, worin:
der hohlzylindrische Napf Folgendes umfasst:
einen Seitenwandabschnitt (11a), bestehend aus einem Wandrohling (11b), der aus einem vorgeformten Rohling (81) gebildet ist, wobei der vorgeformte Rohling aus einem Papier mit vorbestimmter Qualität besteht und ausgeschnitten wird, um eine vorbestimmte Breite einschließlich überlappender Abschnitte an beiden Querenden aufzuweisen und im Wesentlichen als aufrechter Hohlzylinder angeordnet wird, wobei das obere und untere Ende davon im Wesentlichen die gleiche Form und Größe besitzen;
und eine Basisplatte (12), deren Außendurchmesser es erlaubt, dass sie in das Innere des Hohlzylinders (11a), der durch den Seitenwandabschnitt gebildet wird, einsetzbar ist, um den Boden des Napfes zu bilden, worin:
ein Teil des Napfkuchens (C) im hohlzylindrischen Napf durch Gelieren des pastenartigen Teigs durch hydrothermale Reaktion des Stärkebestandteils des Teigs zu α-Stärke gebildet wird, wobei der pastenartige Teig nach dem Einsetzen der Basisplatte in den Seitenwandabschnitt eingebracht wird, um eine vorübergehend nicht verbundene Anordnung zu bilden, wobei das Gelieren durch den Wassergehalt des Teigs und anschließende Erhitzung bewirkt wird, wobei die Oberfläche des Kuchens, die die Innenfläche des Napfes berührt, aus der Oberfläche des Teigs gebildet wird, die die Innenfläche des Napfes berührt und den Seitenwandabschnitt mit der Basisplatte verbindet, und der Kuchenkörper im Napf aus dem Teigkörper gebildet wird;
wobei der Seitenwandabschnitt des Napfes aus einem gefalteten Flachbandrohling (11b) besteht, dessen überlappende Abschnitte zwar miteinander verbunden wurden und der zu einer vorbestimmten Länge geschnitten wurde, die ausreicht, den Seitenwandabschnitt darzustellen, und ausgedehnt wurde, um einen aufrechten Hohlzylinder (11a) zu bilden; und
die Basisplatte (12) als tellerartiger Formkörper ausgebildet ist, bestehend aus einer Bodenplatte (12a) und einer peripheren Wand (14), die von der Peripherie der Bodenplatte weg ragt und eine Größe aufweist, die ausreicht, um in die Innenfläche des ausgedehnten Seitenwandabschnitts einsetzbar zu sein, sodass ein Napf mit einem flachen (10) oder angehobenen (10') Boden gebildet wird.

2. Wärmebehandelter Napfkuchen nach Anspruch 1, worin die tellerartige Basisplatte als kreisrunde tellerartige Basisplatte ausgebildet ist und der Seitenwandabschnitt die Form eines aufrechten kreisrunden Hohlzylinders hat.

3. Wärmebehandelter Napfkuchen nach Anspruch 1, worin die tellerartige Basisplatte als polygonale tellerartige Basisplatte (42) ausgebildet ist und der Seitenwandabschnitt die Form eines aufrechten polygonalen Hohlzylinders hat.

4. Wärmebehandelter Napfkuchen nach einem der Ansprüche 1 bis 3, worin der Seitenwandabschnitt zumindest an seinem oberen Ende (53a) oder unteren Ende (53b) mit einer Vielzahl welliger oder blütenblattartiger Vorsprünge versehen ist.

5. Wärmebehandelter Napfkuchen nach Anspruch 1, worin der Seitenwandabschnitt zumindest am unteren Ende (53b) mit einer Vielzahl welliger oder blütenblattartiger Vorsprünge versehen ist und das untere Ende weiters mit einer angrenzend ausgebildeten Biegekerbe entlang einer Linie, die die Basen der Vorsprünge (57) verbindet, versehen ist, sodass die Vorsprünge, wenn sie entlang der Biegekerbe radial nach innen gebogen werden, einen Aufnahmeabschnitt (53c) bilden können, um die Basisplatte (52) zu halten, wenn diese eingesetzt wird, um den Aufnahmeabschnitt (53c) zu erreichen.

6. Wärmebehandelter Napfkuchen nach Anspruch 1, worin die periphere Wand der Basisplatte (32) aus einer Vielzahl welliger oder blütenblattartiger Vorsprünge (36) auf der Peripherie der Basisplatte und einer angrenzend ausgebildeten Biegekerbe entlang einer die Basen der obigen Vorsprünge (37) verbindenen Linie gebildet wird, sodass die Vorsprünge, wenn sie entlang der Biegekerbe von der peripheren Wand nach oben gebogen werden, an der Innenfläche des Seitenwandabschnitts als Passungsabschnitt anliegen können, um die Basisplatte am Wandabschnitt zu fixieren.

7. Wärmebehandelter Napfkuchen, gebildet durch Füllen eines hohen, allgemein zylindrischen Napfes (10) aus Papier mit vorbestimmter Qualität und einer Basisplatte (12) mit pastenartigem Teig für den Kuchen und anschließendes Gelieren und Verfestigen des Teigs durch Erhitzen, worin:
der hohlzylindrische Napf Folgendes umfasst:
einen Seitenwandabschnitt (11a), bestehend aus einem Wandrohling (11b), der aus einem vorgeformten Rohling (81) gebildet ist, wobei der vorgeformte Rohling aus einem Papier mit vorbestimmter Qualität besteht und ausgeschnitten wird, um eine vorbestimmte Breite einschließlich überlappender Abschnitte an beiden Querenden aufzuweisen und im Wesentlichen als aufrechter Hohlzylinder angeordnet ist, wobei das obere und untere Ende davon im Wesentlichen die gleiche Form und Größe besitzen;
und eine Basisplatte (12), deren Außendurchmesser es erlaubt, dass sie in das Innere des Hohlzylinders (11a), der durch den Seitenwandabschnitt gebildet wird, einsetzbar ist, um den Boden des Napfes zu bilden, worin:
ein Teil des Napfkuchens (C) im hohlzylindrischen Napf durch Gelieren des pastenarigen Teigs durch hydrothermale Reaktion des Stärkebestandteils des Teigs zu α-Stärke gebildet wird, wobei der pastenartige Teig nach dem Einsetzen der Basisplatte in den Seitenwandabschnitt eingebracht wird, um eine vorübergehend nicht verbundene Anordnung zu bilden, wobei das Gelieren durch den Wassergehalt des Teigs und anschließende Erhitzung bewirkt wird, wobei die Oberfläche des Kuchens, die die Innenfläche des Napfes berührt, aus der Oberfläche des Teigs gebildet wird, die die Innenfläche des Napfes berührt und den Seitenwandabschnitt mit der Basisplatte verbindet, und der Kuchenkörper im Napf aus dem Teigkörper gebildet wird;
wobei die Basisplatte (12) eine tellerartige Form besitzt, bestehend aus einer Bodenplatte (12a) und einer peripheren Wand (14), die aus der Peripherie der Bodenplatte ragt, und eine Größe aufweist, die ausreicht, um in die Innenfläche des ausgedehnten Seitenwandabschntts einsetzbar zu sein, um einen Napf mit einer flachen (10) oder angehobenen Basis (10') darzustellen; und
der Seitenwandabschnitt des Napfes als Rohling eines flachen Streifens (61a) ausgebildet ist, der eine Form und Größe besitzt, die durch Abwickeln der Seitenwand des erwünschten Napfes erhalten wird, wobei der pastenartige Teig eingefüllt wird, wenn der Rohling des ersten flachen Streifens um die Außenfläche der peripheren Wand der tellerartigen Basisplatte gewickelt und entlang ihrer gesamten Höhe verbunden oder an Punkten entlang der Überlappungsabschnitte verbunden wurde, um eine Seitenwand (60) zu bilden.

8. Verfahren zur Herstellung eines wärmebehandelten Napfkuchens, umfassend die folgenden Schritte:
Bereitstellen eines langen, vorgeformten, umschlagartigen Rohlings (81) für einen Seitenwandabschnitt eines Napfes, wobei der umschlagartige Rohling aus einem Papier vorbestimmter Qualität besteht und zu einer vorbestimmten Größe einschließlich überlappender Abschnitte an beiden Querenden geschnitten sowie in einem flachen Zustand verbunden und bereitgestellt wird; Schneiden der umschlagartigen Vorlage zu einer vorbestimmten Länge in einem flachen gefalteten Zustand, um einen Flachbandrohling zu bilden, der an den Überlappungsabschnitten (11b) abgedichtet ist und zu einem aufrechten Hohlzylinder ausdehnbar ist, dessen unteres und oberes Ende im Wesentlichen die gleiche Form und Größe (11a) besitzen;
Herstellen einer Basisplatte (12), die in das Innere des Hohlzylinders einsetzbar ist, der durch Ausdehnen des umschlagartigen Rohlings (81) zu einem Seitenwandabschnitt gebildet wird, wobei die Basisplatte einen Durchmesser aufweist, der etwas kleiner als der Innendurchmesser der Wand ist;
Ausdehnen des Flachbandrohlings (11b) zu einem aufrechten Hohlzylinder (11a), um den Seitenwandabschnitt zu bilden, und Einsetzen der Basisplatte in den unteren Teil des Seitenwandabschnitts, um einen hohen, aufrechten, im Wesentlichen zylindrischen Napf (10) als vorübergehende Anordnung herzustellen;
Füllen eines pastenartigen Teigs in das Innere des hohlen, aufrechten, zylindrischen Napfes;
Halten der Form der vorübergehenden Anordnung durch Ausnutzung der pastenartige Beschaffenheit des Teigs, bis die nachfolgende Wärmebehandlung wie z.B. Backen oder Dampfen durchgeführt wird;
Gelieren des Stärkebestandteils des Teigs zu α-Stärke durch hydrothermale Verarbeitung mittels der Hitze der Wärmebehandlung und des Wassergehalts des Teigs;
wodurch der Kuchenkörper im Napf aus dem Teigkörper geformt wird; wobei die Oberfläche des Kuchens, die die Innenfläche des Napfes berührt, aus der Oberfläche des Teigs, die die Innenfläche des Napfes berührt und den Seitenwandabschnitt mit der Basisplatte verbindet, gebildet wird, sodass der Napfkuchen einstückig mit dem Napf ausgebildet ist; worin:
die Basisplatte als tellerartige Basisplatte (12) mit einer Bodenplatte (12a), deren Durchmesser etwas kleiner als der Innendurchmesser der Seitenwand ist, und einer peripheren Wand (14), die von der Peripherie der Bodenplatte weg ragt und einen Durchmesser und eine Höhe besitzt, die dem Inneren der Seitenwand angepasst sind, ausgebildet ist.

9. Verfahren zur Herstellung eines wärmebehandelten Napfkuchens nach Anspruch 8, worin:
der Arbeitsschritt des Formens der Seitenwandabschnitte und der Basisplatte in einem Werk zur Napfherstellung durchgeführt wird;
während die Arbeitsschritte des Ausdehnens des gefalteten Seitenwandabschnitts (11b) zu einem aufrechten Hohlzylinder (11a), des Einsetzens der Basisplatte (12) in den Innenteil des Bodenteils des Zylinders zur Bildung einer vorübergehenden Anordnung (10), des Einfüllens des pastenartigen Teigs in den Hohlzylinder und der Durchführung der Wärmebehandlung wie z.B. des Backens oder Dampfens getrennt in der Bäckerei erfolgen.

10. Verfahren zur Herstellung eines wärmebehandelten Napfkuchens nach einem der Ansprüche 8 oder 9, worin:
die Schneidarbeit zur Bildung der Seitenwand solcherart durchgeführt wird, dass das untere Ende eines Seitenwandabschnitts (73) und das obere Ende des nächsten Seitenabschnitts (73) gleichzeitig geformt werden, indem ein oder mehrere gerade Schneidgeräte mit welligen oder blütenblattartigen Vorsprüngen (85c) verwendet werden, während das Papiermaterial (81) in Richtung der axialen Mittellinie des Hohlzylinders zugeführt wird.

11. Verfahren zur Herstellung eines wärmebehandelten Napfkuchens nach einem der Ansprüche 8 bis 10, worin:
jede Schneidarbeit zur Herstellung des Seitenwandabschnitts solcherart durchgeführt wird, dass ein Doppelrohling (71a) geschaffen wird, der eine Vielzahl an Rohlingen für jede Seitenwand trägt, die in die einzelnen Seitenwände aufgeteilt werden können, indem sie entlang einer zuvor zum Zeitpunkt des Schneidens gebildeten Schnittlinie (71e) getrennt werden;
die Schneidarbeit durch ein Rotationsstanzsystem durchgeführt wird, das Folgendes umfasst:
eine obere Walze (85a) mit einer ersten vorragenden Klinge zum Schneiden des oberen und unteren Endes der Seitenwand der Näpfe und einer zweiten vorragenden Klinge (85d) zum Ausbilden einer Schnittlinie zum Trennen jeder Seitenwandabschnittvorlage von dem Doppelrohling, versehen mit einer Vielzahl länglicher Klingenabschnitte für das Schneiden von Schlitzen (85c) und einer Vielzahl von Teilen ohne Klingen, die zwischen zwei angrenzenden Klingenabschnitten (85f) positioniert sind, um kurze Festhalteabschnitte zu bilden, die durch die Klingenabschnitte nicht geschnitten werden; und
eine untere Walze (85b), die mit einer weichen Oberfläche aus Filzpapier o.dgl. ausgebildet ist, durch die Rillen, die mit der ersten und zweiten vorragenden Klinge korrespondieren, durch die erste und zweite vorragende Klinge geformt werden können.

12. Verfahren zur Herstellung eines wärmebehandelten Napfkuchens nach einem der Ansprüche 8 bis 11, worin:
die Schneidarbeit zur Herstellung der Seitenwand solcherart erfolgt, dass eine Einzelvorlage für jeden Seitenwandabschnitt gebildet wird, die zum Ausschneidezeitpunkt am oberen oder unteren Ende von der nächsten getrennt werden kann;
und das Schneiden durch ein Rotationsstanzsystem erfolgt, das Folgendes umfasst:
eine obere Walze mit mehreren Anordnungen an vorragenden Klingen zum Schneiden des oberen und unteren Endes des Seitenwandabschnitts der Näpfe als gerade Enden oder als wellige oder blütenblattartige Vorsprünge (85a);
und eine untere Walze (85), die mit einer weichen Oberflächenschicht aus Filzpapier o.dgl. versehen ist, wodurch Rillen, die mit den vorragenden Klingen korrespondieren, durch die vorragenden Klingen geformt werden können.

13. Napf zur Herstellung eines Napfkuchens nach einem der Ansprüche 1 bis 7 oder zur Verwendung bei der Durchführeung eines Verfahrens nach einem der Ansprüche 8 bis 12.

14. Napf nach Anspruch 13, der aus ungebleichtem Kraftpapier besteht.

## Revendications

1. Petit gâteau traité thermiquement réalisé en remplissant un moule creux généralement cylindrique (10) en papier d'une qualité prédéterminée et présentant une plaque de base (12) avec une pâte pour le gâteau, suivi de la gélatinisation et de la solidification de ladite pâte par échauffement, dans lequel :
ledit moule généralement cylindrique comporte :
une portion de paroi latérale (11a) réalisée par une ébauche de paroi (11b) réalisée à partir d'une ébauche formée préalablement (81), ladite ébauche formé préalablement étant réalisée en papier de ladite qualité prédéterminée et est coupée pour avoir une largeur prédéterminée incluant des parties chevauchées aux deux extrémités transversales et agencées sensiblement comme cylindre creux érigé, dont les extrémités supérieure et inférieure sont sensiblement de la même forme et taille ;
et une plaque de base (12) ayant un diamètre extérieur de façon à pouvoir être inséré dans l'intérieur du cylindre creux (11a) formé par la partie de paroi latérale pour constituer la base dudit moule, dans lequel
une partie dudit petit gâteau (C) est formée dans le moule cylindrique creux par gélatinisation de ladite pâte par la réaction hydrothermique de l'amidon constitutif de ladite pâte en amidon alpha, ladite pâte ayant été introduite dans ladite partie de paroi latérale après l'insertion de la plaque de base pour former un ensemble temporairement non lié, ladite gélatinisation étant effectuée par la teneur en eau de ladite pâte et l'échauffement subséquent, la surface dudit gâteau venant en contact avec la face intérieure dudit moule étant formée par la surface de ladite pâte venant en contact avec la face intérieure dudit moule et liant ladite partie de paroi latérale et ladite plaque de base, le corps dudit gâteau dans ledit moule étant formé par le corps de ladite pâte ;
ladite partie de paroi latérale du moule est préparée à partir d'une ébauche de bande plate pliée (11b) dont les parties chevauchées ont été liées préalablement et qui a été coupée à une longueur prédéterminée suffisante pour constituer ladite partie de paroi latérale et étendue pour constituer un cylindre creux érigé (11a) ; et
ladite plaque de base (12) est réalisée en une forme d'assiette constituée d'une plaque de fond (12a) et d'une paroi périphérique (14) s'élevant depuis la périphérie de ladite plaque de fond et d'une taille suffisante pour pouvoir être insérée dans la face intérieure de ladite portion de paroi latérale étendue de façon à constituer un moule soit avec une base plate (10) soit avec une base relevée (10').

2. Petit gâteau traité thermiquement selon la revendication 1, où ladite plaque de base en forme d'assiette est préparée comme une plaque de base du type d'assiette circulaire, et ladite partie de paroi latérale prend la forme d'un cylindre circulaire creux érigé.

3. Petit gâteau traité thermiquement selon la revendication 1, où ladite plaque de base en forme d'assiette est préparée comme plaque de base du type d'assiette polygonale (42) et ladite paroi latérale prend la forme d'un cylindre polygonal creux érigé.

4. Petit gâteau traité thermiquement selon l'une des revendications 1 à 3, où ladite portion de paroi latérale présente plusieurs saillies en forme d'onde ou de pétale au moins à l'une de ses extrémités supérieure (53a) ou inférieure (53b).

5. Petit gâteau traité thermiquement selon la revendication 1, où ladite partie de paroi latérale présente plusieurs saillies en forme d'onde ou de pétale au moins à l'extrémité inférieure (53b), et l'extrémité inférieure présente en outre une encoche courbée formée de manière continue le long d'une ligne reliant les bases des saillies précitées (57), de telle sorte que lesdites saillies, lorsqu'elles sont courbées radialement vers l'intérieur le long de ladite encoche pliée peuvent former une partie de réception (53c) pour tenir la plaque de base (52) lorsque ladite plaque de base est insérée pour atteindre ladite portion de réception (53c).

6. Petit gâteau traité thermiquement selon la revendication 1, où ladite paroi périphérique de ladite plaque de base (32) est réalisée à partir d'une pluralité de saillies en forme d'onde ou de pétale (36) sur la périphérie de ladite plaque de base et d'une encoche pliée formée de manière continue le long d'une ligne reliant les bases des saillies précitées (37), de telle sorte que lesdites saillies, lorsqu'elles sont pliées vers le haut le long de ladite encoche de pliage depuis ladite paroi périphérique, peuvent s'adapter à la face intérieure de ladite portion de paroi latérale comme portion d'adaptation pour fixer la plaque de base à ladite portion de paroi latérale.

7. Petit gâteau traité thermiquement réalisé en remplissant un moule creux généralement cylindrique (10) en papier d'une qualité prédéterminée et comportant une plaque de base (12) avec une pâte pour le gâteau, suivi de la gélatinisation et de la solidification de ladite pâte par chauffage, dans lequel ledit moule cylindrique creux comporte :
une portion de paroi latérale (11a) formée par une ébauche de paroi (11b) fabriquée à partir d'une ébauche formée préalablement (81), ladite ébauche formée préalablement étant réalisée en papier de ladite qualité prédéterminée et coupée pour avoir une largeur prédéterminée incluant des portions de chevauchement aux deux extrémités transversales et agencées sensiblement comme un cylindre creux et rigide, dont les extrémités supérieure et inférieure ont sensiblement la même forme et taille ;
et une plaque de base (12) ayant un diamètre extérieur de façon à pouvoir être insérée dans l'intérieur du cylindre creux (11a) formé par la partie de paroi latérale pour constituer la base dudit moule, dans lequel :
une partie dudit petit gâteau (C) est formée dans le moule cylindrique creux par gélatinisation de ladite pâte par la réaction hydrothermique de l'amidon constitutif de ladite pâte en amidon alpha, ladite pâte ayant été introduite dans ladite portion de paroi latérale après l'insertion de la plaque de base pour former un ensemble temporairement non-lié, ladite gélatinisation étant effectuée par la teneur en eau de ladite pâte et un échauffement subséquent, la surface dudit gâteau venant en contact avec la face intérieure dudit moule étant formée par la surface de ladite pâte venant en contact avec la face intérieure dudit moule et liant ladite portion de paroi latérale et ladite plaque de base, et le corps dudit gâteau dans ledit moule étant formé par le corps de ladite pâte ;
ladite plaque de base (12) est réalisée sous forme d'assiette constituée d'une plaque de fond (12a) et d'une paroi périphérique (14) debout depuis la périphérie de ladite plaque de fond et d'une taille suffisante pour pouvoir être insérée dans la face intérieure de ladite portion de paroi latérale étendue de façon à constituer un moule avec une base soit plate (10) soit relevée (10') ; et
la portion de paroi latérale dudit moule est préparé comme ébauche à partir d'une bande plate (61a) ayant une forme et une taille obtenues en développant la paroi latérale du moule recherché, et ladite pâte est introduite lorsque l'ébauche de ladite bande plate a été enroulée autour de la face extérieure de la paroi périphérique de ladite plaque de base en forme d'assiette et liée sur toute sa hauteur ou liée par points à des points le long des parties chevauchées, pour constituer une paroi latérale (60).

8. Procédé pour faire un petit gâteau traité thermiquement comprenant les étapes consistant à :
réaliser un type d'enveloppe long formé préalablement (81) pour une partie de paroi latérale d'un moule, ladite ébauche du type enveloppe étant réalisée en papier d'un grade de qualité prédéterminée et découpée à une taille prédéterminée incluant des parties de chevauchement aux deux extrémités transversales et liée et fournie dans un état plat ; en coupant ladite ébauche du type enveloppe en une longueur prédéterminée dans un état plat plié pour former une ébauche de bande plate rendue étanche auxdites parties de chevauchement (11b), ladite ébauche de bande plate pouvant s'étendre pour former un cylindre creux debout avec des extrémités inférieure et supérieure sensiblement de la même forme et taille (11a) ;
préparer une plaque de base (12) afin d'être insérée dans l'intérieur d'un cylindre creux formé en étendant ladite ébauche du type enveloppe (81) dans ladite portion de paroi latérale, ladite plaque de base ayant un diamètre légèrement plus petit que le diamètre intérieur de ladite paroi ;
étendre ladite ébauche de bande plate (11b) en un cylindre creux debout (11a) pour former ladite portion de paroi latérale et insérer ladite plaque de base dans la partie inférieure de ladite portion de paroi latérale pour réaliser un moule creux érigé, sensiblement cylindrique (10) comme ensemble temporaire ;
introduire une pâte dans l'intérieur dudit moule cylindrique creux debout,
maintenir la forme dudit ensemble temporaire en utilisant la nature pâteuse de ladite pâte jusqu'à ce que le traitement thermique subséquent comme la cuisson ou une cuisson à la vapeur soit effectué,
procéder à la gélatinisation de l'amidon constitutif de ladite pâte en amidon alpha par un traitement hydrothermique par la chaleur dudit traitement thermique et de la teneur en eau de ladite pâte,
en formant ainsi le corps du gâteau dans ledit moule à partir du corps de ladite pâte ; la surface dudit gâteau venant en contact avec la face intérieure dudit moule étant formée par la surface de ladite pâte venant en contact avec la face intérieure du moule et liant ladite portion de paroi latérale et ladite plaque de base ensemble de telle sorte que le petit gâteau est formé intégralement avec ledit moule ; où
ladite plaque de base est préparée comme plaque de base en forme d'assiette (12) avec une plaque de fond (12a) d'un diamètre légèrement inférieur au diamètre intérieur de ladite paroi latérale et une paroi périphérique (14) érigée depuis la périphérie de ladite plaque de fond et présentant un diamètre et une hauteur pour s'adapter à l'intérieur de ladite paroi latérale.

9. Procédé pour faire un petit gâteau traité thermiquement selon la revendication 8, dans lequel :
la travail pour former lesdites portions de paroi latérale et ladite plaque de base est réalisé dans une usine de fabrication de moule,
alors que le travail pour étendre la portion de paroi latérale pliée (11b) en un cylindre érigé creux (11a), pour insérer ladite plaque de base (12) dans la partie intérieure de la partie de fond du cylindre comme ensemble temporaire (10), pour verser la pâte dans le cylindre creux et pour conduire le traitement thermique comme la cuisson ou la cuisson à la vapeur est réalisé séparément dans des boulangeries.

10. Procédé pour faire un petit gâteau traité thermiquement selon l'une des revendications 8 ou 9, dans lequel :
ledit travail de coupe pour réaliser la paroi latérale est fait de manière à former l'extrémité inférieure d'une portion de paroi latérale (73) et l'extrémité supérieure de l'autre portion latérale (73) concurremment en utilisant un ou deux appareils de coupe rectiligne ayant des saillies en forme d'onde ou de pétale (85c) pendant que ledit matériau de papier (81) est amené dans la direction de la ligne centrale axiale dudit cylindre creux.

11. Procédé pour faire un petit gâteau traité thermiquement selon l'une des revendications 8 à 10 dans lequel :
ledit travail de coupe pour faire la portion de paroi latérale est effectué de manière à constituer une ébauche de type double (71a) portant une pluralité d'ébauches pour chaque paroi latérale qui peuvent être séparées en parois latérales individuelles en les séparant le long d'une ligne de coupe (71e) réalisée préalablement au moment de la coupe,
et ladite coupe est effectuée par un système de coupe rotatif à matrice équipé de :
un rouleau supérieur (85a) présentant un premier organe de coupe mâle pour couper les extrémités supérieure et inférieure de la paroi latérale desdits moules, et un deuxième organe de coupe mâle (85d) pour former une ligne de coupe pour séparer chaque ébauche de portion de paroi latérale de l'ébauche de type double, et présentant une pluralité de portions de lame légèrement oblongues pour couper des fentes (85c) et une pluralité de parties sans lame interposées entre deux portions de lame adjacentes (85f) pour former de courtes portions de retenue qui ne sont pas coupées par lesdites portions de lame et
un rouleau inférieur (87b) présentant une couche de surface souple en papier feutre ou analogue par lequel des rainures correspondant auxdits premier et deuxième organes de coupe mâles peuvent être formées par lesdits premier et deuxième organes de coupe mâles.

12. Procédé pour faire un petit gâteau traité thermiquement selon l'une des revendications 8 à 11, dans lequel :
ledit travail de coupe pour réaliser la paroi latérale est effectué de manière à constituer une ébauche du type unique pour chaque portion de paroi latérale qui peut être séparée de la prochaine à l'extrémité supérieure ou inférieure au moment de la coupe,
et ladite coupe est effectuée par un système de coupe rotatif à matrice équipé de :
un rouleau supérieur présentant plusieurs rangées d'organes de coupe mâles pour couper les extrémités supérieure et inférieure de la portion de paroi latérale desdits moules comme extrémités rectilignes ou saillies en forme d'onde ou de pétale (85a),
et un rouleau inférieur (85b) présentant une couche de surface souple en papier feutre ou analogue par lequel des rainures correspondant auxdits organes de coupe mâles peuvent être formées par lesdits organes de coupe mâles.

13. Moule pour faire un petit gâteau selon l'une des revendications 1 à 7 ou pour utilisation pour mettre en oeuvre un procédé en accord avec l'une des revendications 8 à 12.

14. Moule selon la revendication 13, qui est réalisé en papier kraft écru.
